# NEUE EUROPÄISCHE PATENTSCHRIFT

(11) **EP 1 047 521 B2**
(45) Veröffentlichungstag und Bekanntmachung des Hinweises auf die Entscheidung über den Einspruch: **30.12.2009**
(45) Hinweis auf die Patenterteilung: 14.05.2003
(21) Anmeldenummer: 99900388.2
(22) Anmeldetag: 08.01.1999
(51) Int. Cl.: B23K 9/10

(54) **STEUERVORRICHTUNG FÜR EIN SCHWEISSGERÄT**
CONTROL DEVICE FOR A WELDING APPARATUS
DISPOSITIF DE COMMANDE POUR APPAREIL DE SOUDAGE

(30) Priorität: 13.01.1998 AT 3498
(43) Veröffentlichungstag der Anmeldung: 02.11.2000
(73) Patentinhaber: Fronius International GmbH, 4643 Pettenbach (AT)
(72) Erfinder: FRIEDL, Helmut, A-4621 Sipbachzell (AT); NIEDEREDER, Franz, A-4652 Fischlham (AT)
(74) Vertreter: Secklehner, Günter
(86) Internationale Anmeldenummer: PCT/AT1999/000003
(87) Internationale Veröffentlichungsnummer: WO 1999/036219

(56) Entgegenhaltungen:
- WO-A-91/01842
- US-A- 5 837 968
- X.M. ZENG ET AL.: "High-frequency TIG-welding power supply with microprocessor control" IEEE PROCEEDINGS-A, Bd. 137, Nr. 4, Juli 1990, XP000132845 ( Herts., GB )

## Beschreibung

Die Erfindung betrifft eine Vorrichtung, wie sie im Oberbegriff des Anspruches 1 beschrieben ist.

Eine derartige Vorrichtung ist beispielsweise aus dem Prospekt "Lorch Inventor-MIG-MAG SAPROM System 900" des Unternehmens Lorch bekannt.

Es sind bereits Steuervorrichtungen für Schweißgeräte bekannt, bei denen im Schweißbrenner eine Eingabevorrichtung und eine Anzeigevorrichtung angeordnet sind. Die einzelnen Bedienungselemente der Eingabevorrichtung bzw. der Anzeigevorrichtung sind über Leitungen direkt mit der Steuervorrichtung, insbesondere der Mikroprozessorsteuerung des Schweißgerätes, verbunden, sodaß durch Betätigung eines Bedienungselementes vom Schweißbrenner aus ein Steuervorgang eingeleitet werden kann. Die vorgenommenen Änderungen bzw. Einstellungen werden an der Anzeigevorrichtung am Schweißbrenner angezeigt, sodaß der Benutzer jederzeit die Änderungen an der Anzeigevorrichung ablesen kann. Nachteilig ist hierbei, daß durch das direkte Verbinden der einzelnen Bedienungselemente mit der Steuervorrichtung eine Vielzahl von Leitungen benötigt werden, sodaß ein entsprechend dickes Schlauchpaket zum Verbinden des Schweißgerätes mit dem Schweißbrenner entsteht, wodurch eine Einschränkung in der Flexibilität für die Benutzung des Schweißbrenners gegeben ist.

Der vorliegenden Erfindung liegt die Aufgabe zugrunde, eine Steuervorrichtung zu schaffen, bei der eine einfache Datenübertragung zwischen dem Schweißbrenner und dem Schweißgerät ermöglicht wird.

Diese Aufgabe der Erfindung wird durch die Merkmale im Kennzeichenteil des Anspruches 1 gelöst. Vorteilhaft ist hierbei, daß durch die Anordnung eines Datenbusses bzw. eines Feldbusses eine serielle Datenübertragung mit einer beliebigen Anzahl von Steuervorgängen bzw. Steuerabläufen zwischen dem Schweißbrenner und dem Schweißgerät durchgeführt werden kann. Ein weiterer Vorteil liegt darin, daß durch die Verwendung des Datenbusses beliebig viele Varianten von Schweißbrennern mit dem Schweißgerät verbunden werden können, da eine Hardwareanpassung an die unterschiedlichen Schweißbrenner nicht mehr notwendig ist, da nur mehr durch einfache Softwareanpassungen eine Erweiterung des Schweißgerätes erzielt werden kann.

Von Vorteil ist auch, dass kurze Leitungen zwischen den aktiven und passiven Bauteilen und der Eingabevorrichtung bzw. der Ausgabevorrichtung erzielt werden, sodaß äußere Einflüsse auf die Leitungen gering gehalten werden können.

Es ist auch eine Ausbildung nach Anspruch 2 von Vorteil, da durch das Einsetzen eines standardisierten Datenbusses eine Verbindung mit externen Steuervorrichtungen bzw. mit PC's jederzeit möglich ist.

Vorteilhaft ist auch eine Ausbildung nach Anspruch 3, da dadurch die Anzahl von Leitungen zur Datenübertragung eingespart werden kann und gleichzeitig über das Busleitungssystem mehrere Komponenten angesteuert werden können.

Es ist auch eine Ausbildung nach Anspruch 4 von Vorteil, da dadurch eine beliebige Anzahl von unterschiedlichen Steuervorgängen über die Eingabevorrichtung bzw. Ausgabevorrichtung an das Schweißgerät übertragen werden kann.

Von Vorteil ist auch eine Ausbildung nach Anspruch 5, da dadurch beliebig viele Bedienungselemente am Schweißbrenner angeordnet werden können, wobei für die Datenübertragung wiederum nur eine geringe Anzahl von Leitungen für den Datenbus benötigt werden.

Vorteilhaft ist auch eine Ausbildung nach Anspruch 6, da durch die Verwendung eines standardisierten Datenbusses jeder beliebige Schweißbrenner mit dem Schweißgerät verbunden werden kann, sodaß eine hohe Flexibilität für den Benutzer gegeben ist.

Es ist auch eine Ausbildung nach Anspruch 7 von Vorteil, da dadurch eine automatische Anpassung von der Steuervorrichtung an den jeweiligen Schweißbrenner durchgeführt werden kann.

Es ist auch eine Ausbildung nach Anspruch 8 von Vorteil, da dadurch eine kostengünstige Herstellung eines Schweißgerätes mit einem entsprechenden Datenbus erreicht wird.

Vorteilhaft ist auch eine Ausbildung nach Anspruch 9, da dadurch bei Neuentwicklungen von Schweißbrennern bzw. bei Einsatz eines anderen Schweißbrenners durch einfache Softwareänderung im Schweißgerät der Schweißbrenner an einem älteren Schweißgerät angeschlossen werden kann.

Von Vorteil ist auch eine Ausbildung nach Anspruch 10, da dadurch eine Vernetzungsmöglichkeit mehrerer Steuervorrichtungen mit der Steuervorrichtung des Schweißgerätes ermöglicht wird, sodaß über die Steuervorrichtung des Schweißgerätes auf einen Produktionsablauf eingegriffen werden kann.

Es ist auch eine Ausbildung nach Anspruch 11 von Vorteil, da dadurch in einfacher Form eine Datenübertragung erzielt wird, wobei äußere Einflüsse durch die Verwendung eines Lichtleiters weitestgehend vermieden werden.

Von Vorteil ist auch eine Ausbildung nach Anspruch 12, da dadurch eine zusätzliche Eingabemöglichkeit für den Benutzer gegeben ist.

Vorteilhaft ist auch eine Ausbildung nach Anspruch 13, da dadurch Leitungen für die Datenübertragung eingespart werden können.

Schließlich ist auch eine Ausbildung nach Anspruch 14 von Vorteil, da dadurch der Benutzer während des Schweißprozesses eine Änderung von zumindest einem Schweißparameter durchführen kann und somit eine optimale Anpassung des Schweißprozesses an die unterschiedlichsten Bedingungen durchgeführt werden kann.

Die Erfindung wird im nachfolgenden anhand des in den Zeichnungen dargestellten Ausführungsbeispiels näher erläutert.

Es zeigen:
- Fig. 1: einen schematischen Aufbau des Schweißgerätes;
- Fig. 2: ein Blockschaltbild des Schweißgerätes mit dem Schweißbrenner in vereinfachter, schematischer Darstellung.

Einführend sei festgehalten, daß in dem beschriebenen Ausführungsbeispiel gleiche Teile mit gleichen Bezugszeichen bzw. gleichen Bauteilbezeichnungen versehen sind, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben wie z.B. oben, unten, seitlich usw. auf die unmittelbar beschriebenen sowie dargestellten Figuren bezogen und sind bei einer Lageänderung sinngemäß auf die neue Lage zu übertragen.

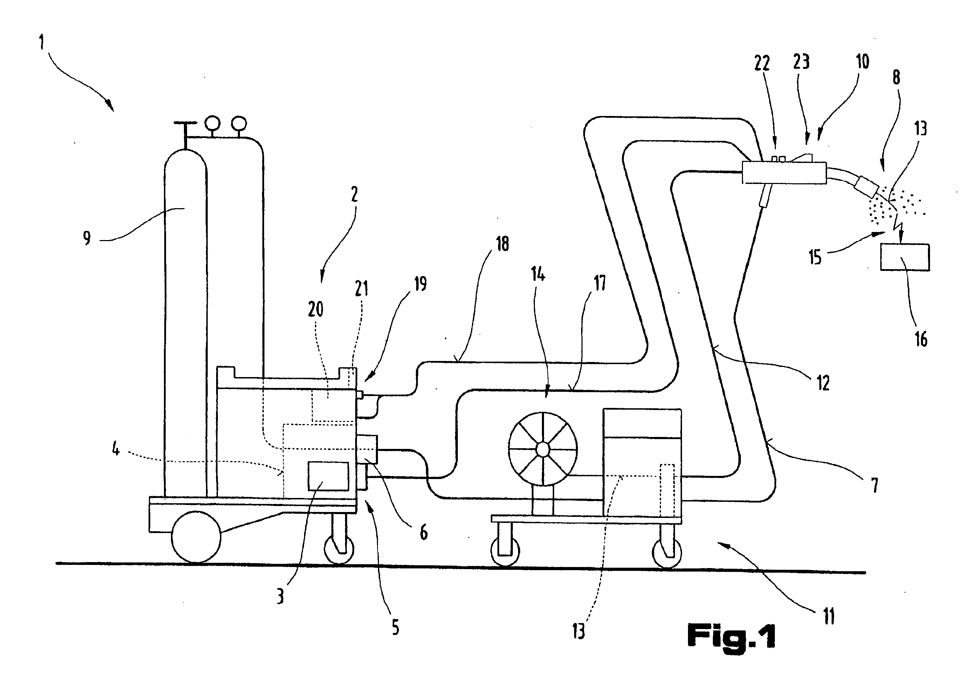

In Fig. 1 ist ein Schweißgerät 1 für verschiedenste Schweißverfahren, wie z.B. MIG/MAG-Schweißen bzw. TIG-Schweißen, gezeigt. Das Schweißgerät 1 umfaßt eine Stromquelle 2 mit einem Leistungsteil 3, eine Steuervorrichtung 4 und ein dem Leistungsteil 3 bzw. der Steuervorrichtung 4 zugeordnetes Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 angeordnet ist.

Zudem kann über die Steuervorrichtung 4 auch noch ein Drahtvorschubgerät 11, wie für das MIG/MAG-Schweißen üblich, angesteuert werden, wobei über eine Versorgungsleitung 12 ein Schweißdraht 13 von einer Vorratstrommel 14 in den Bereich des Schweißbrenners 10 zugeführt wird. Der Strom zum Aufbau eines Lichtbogens 15 zwischen dem Schweißdraht 13 und einem Werkstück 16 wird über eine Versorgungsleitung 17 vom Leistungsteil 3 der Stromquelle 2 dem Schweißbrenner 10 bzw. dem Schweißdraht 13 zugeführt.

Zum Kühlen des Schweißbrenners 10 kann über einen Kühlkreislauf 18 der Schweißbrenner 10 unter Zwischenschaltung eines Strömungswächters 19 mit einem Wasserbehälter 20 verbunden werden, wodurch bei der Inbetriebnahme des Schweißbrenners 10 der Kühlkreislauf 18 von der Steuervorrichtung 4 gestartet wird und somit eine Kühlung des Schweißbrenners 10 bzw. des Schweißdrahtes 13 erreicht wird.

Weiters weist das Schweißgerät 1 eine Eingabe- und/oder Anzeigevorrichtung 21 auf, über die die unterschiedlichsten Schweißparameter bzw. Betriebsarten des Schweißgerätes 1 eingestellt werden können. Dabei werden die über die Eingabe- und/oder Anzeigevorrichtung 21 eingestellten Schweißparameter an die Steuervorrichtung 4 weitergeleitet und von dieser werden anschließend die einzelnen Komponenten des Schweißgerätes 1 angesteuert.

Selbstverständlich ist es möglich, daß nicht wie in dem dargestellten Ausführungsbeispiel der Schweißbrenner 10 über einzelne Leitungen mit den einzelnen Komponenten, insbesondere mit dem Schweißgerät 1 bzw. dem Drahtvorschubgerät 11, verbunden wird, sondern, daß diese einzelnen Leitungen in einem gemeinsamen Schlauchpaket zusammengefaßt sind und an dem Schweißbrenner 10 angeschlossen werden.

Weiters weist der Schweißbrenner 10 eine Eingabevorrichtung 22 sowie eine Anzeigevorrichtung 23 auf. Über die Eingabevorrichtung 22 bzw. über die Anzeigevorrichtung 23 kann der Benutzer beim Durchführen eines Schweißprozesses die eingestellten Schweißparameter über die Anzeigevorrichtung 23 ablesen bzw. die einzelnen Schweißparameter über die Eingabevorrichtung 22, die beispielsweise durch einzelne Taster oder dgl. gebildet ist, beeinflussen bzw. verändern, wodurch eine optimale Anpassung des Schweißprozesses über den Schweißbrenner 10 durchgeführt werden kann. Selbstverständlich ist es möglich, daß der Benutzer während des Schweißprozesses über die Eingabevorrichtung 22 die eingestellten Schweißparameter ändern kann, sodaß jederzeit eine optimale Anpassung des Schweißprozesses durchgeführt werden kann.

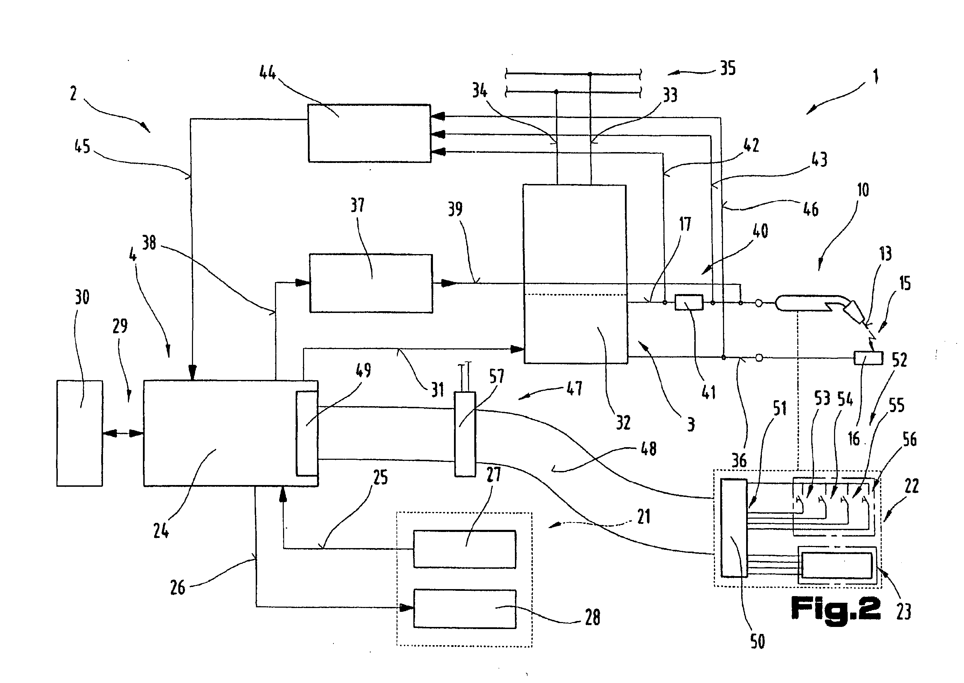

In Fig. 2 ist ein Blockschaltbild des Schweißgerätes 1 in vereinfachter Form dargestellt.

Die Steuervorrichtung 4 wird bevorzugt aus einer Mikroprozessorsteuerung 24 gebildet. An einem Eingang der Steuervorrichtung 4, insbesondere der Mikroprozessorsteuerung 24, ist über mehrere Leitungen 25, 26, wovon jedoch aufgrund der Übersichtlichkeit halber nur jeweils eine Leitung 25, 26 dargestellt ist, die Eingabe- und/oder Anzeigevorrichtung 21 angeschlossen. Dabei ist es jedoch möglich, daß die Eingabeund/oder Anzeigevorrichtung 21 durch getrennte Bereiche, also durch eine Eingabeeinrichtung 27 und eine Anzeigeeinrichtung 28 gebildet sein kann. Hierzu ist es möglich, daß für die Eingabeeinrichtung 27 eine Tastatur oder jegliche andere Arten von Eingabemöglichkeiten, wie z.B. Potentiometer, Touchscreen oder konventionelle Taster usw., eingesetzt werden können. Durch die einzelnen Komponenten der Eingabeeinrichtung 27 kann der Benutzer die einzelnen Schweißparameter anwählen und über entsprechende Tasten am Schweißgerät 1 einstellen, sodaß ein entsprechender Schweißprozeß mit den gewünschten Schweißparametern für die unterschiedlichen Schweißvorgänge eingestellt und durchgeführt werden kann.

Die Anzeigeeinrichtung 28 kann beispielsweise durch eine Displayanzeige, eine LED-Anzeige, eine LCD-Anzeige, eine Digital-Anzeige, einen Bildschirm oder einen Touchscreen gebildet werden, wobei an der Anzeigeeinrichtung 28 die ausgewählten Schweißparameter, insbesondere deren Werte, dem Benutzer angezeigt werden. Der Datenaustausch zwischen der Eingabe- und/oder Anzeigevorrichtung 21, insbesondere der Eingabeeinrichtung 27 und der Ausgabeeinrichtung 28, erfolgt über die Leitungen 25, 26, d.h., daß bei Betätigung der Eingabeeinrichtung 27 ein entsprechendes Signal an die Steuervorrichtung 4 übergeben wird, worauf die Steuervorrichtung 4, insbesondere die Mikroprozessorsteuerung 24, einen entsprechenden Steuervorgang durchführt. Gleichzeitig bzw. anschließend wird von der Steuervorrichtung 4 über die Leitung 26 die Anzeigeeinrichtung 28 aktiviert, worauf der entsprechende Wert bzw. das übergebene Signal von der Steuervorrichtung 4 an der Anzeigeeinrichtung 28 angezeigt wird.

An weiteren Ein- und/oder Ausgängen der Mikroprozessorsteuerung 24 ist beispielsweise über ein Bussystem 29, das beispielsweise aus Adreß- und Datenleitungen gebildet wird, ein Speicher 30 angeschlossen. In dem Speicher 30 werden die einzelnen Daten und Programme, insbesondere Anwenderprogramme, die für eine Einstellung des Schweißgerätes 1 benötigt werden, hinterlegt. Weiters ist es möglich, daß in dem Speicher 30 weitere benutzerspezifische Daten abgespeichert werden können. Hierzu kann der Benutzer über die Eingabeeinrichtung 27 durch Aktivieren eines entsprechenden Organs eine Abspeicherung der Schweißeinstellung vom Schweißgerät 1 im Speicher 30 einleiten, sodaß ein Wiederaufruf dieser Daten bzw. der Einstellung des Schweißgerätes 1 möglich ist.

Um einen entsprechenden Schweißprozeß von der Steuervorrichtung 4 zu steuern, ist die Steuervorrichtung 4 über zumindest eine Leitung 31 mit dem Leistungsteil 3 verbunden, wobei über die Leitung 31 der Datenaustausch zwischen dem Leistungsteil 3 und der Steuervorrichtung 4 durchgeführt wird. Hierzu ist es möglich, daß mehrere Leitungen 31 angeordnet sein können, wobei jedoch der Übersichtlichkeit halber wiederum nur eine Leitung 31 dargestellt ist. Der Leistungsteil 3 kann beispielsweise durch eine primärgetaktete Inverterstromquelle 32 gebildet werden. Damit das Leistungsteil 3 mit Strom und Spannung versorgt werden kann, ist das Leistungsteil 3 über Versorgungsleitungen 33, 34 mit einem Spannungsversorgungsnetz 35 verbunden. Selbstverständlich ist es möglich, daß anstelle des Spannungsversorgungsnetzes 35 jede andere Art von Energiequelle, wie beispielsweise eine Batterie, zur Speisung des Leistungsteils 3 verwendet werden kann. Es ist auch möglich, daß das Spannungsversorgungsnetz 35 durch ein Zweiphasennetz bzw. durch ein Dreiphasennetz gebildet sein kann.

Das Leistungsteil 3 hat die Aufgabe, die vom Spannungsversorgungsnetz 35 gelieferte Energie in eine entsprechende Schweißenergie umzuwandeln, wie dies bereits aus dem Stand der Technik bekannt ist und daher nicht näher auf die Funktion der Umwandlung der gelieferten Energie eingegangen wird. Damit ein Schweißstromkreis mit dem Schweißbrenner 10 aufgebaut werden kann, ist das Leistungsteil 3 über die Versorgungsleitung 17 mit dem Schweißbrenner 10 verbunden, wogegen das Werkstück 16 über eine weitere Versorgungsleitung 36 ebenfalls mit dem Leistungsteil 3 verbunden ist, sodaß ein Stromkreislauf über den Schweißbrenner 10, insbesondere über den Schweißdraht 13 und das Werkstück 16, aufgebaut werden kann.

Damit nunmehr der Lichtbogen 15 zwischen dem Schweißdraht 13 und dem Werkstück 16 gezündet werden kann, ist es beispielsweise möglich, daß das Schweißgerät 1 einen Hochfrequenzgenerator 37 aufweist. Dieser ist über Leitungen 38, 39 sowohl mit der Steuervorrichtung 4 als auch mit der Versorgungsleitung 17 für den Schweißbrenner 10 verbunden. Selbstverständlich ist es möglich, daß zum Zünden des Lichtbogens 15 jedes andere zum Stand der Technik zählende Verfahren eingesetzt werden kann. Damit der Lichtbogen zwischen dem Schweißdraht 13 und dem Werkstück 16 über den Hochfrequenzgenerator 37 gezündet werden kann, wird von der Steuervorrichtung 4 bei Aktivierung des Schweißprozesses ein Hochfrequenzsignal ausgesendet, welches anschließend auf die Schweißenergie aufmoduliert wird und somit eine Zündung des Lichtbogens 15 erfolgt.

Damit eine Überwachung des Schweißprozesses möglich ist, ist in der Versorgungsleitung 17 eine Meßvorrichtung 40 angeordnet. Die Meßvorrichtung 40 kann dabei durch einen zum Stand der Technik zählenden Shunt 41 gebildet werden, wodurch der Stromfluß über die Versorgungsleitung 17 von der Meßvorrichtung 40 erfaßt werden kann. Dazu sind beidseits des Shunts 41 Leitungen 42, 43 mit der Versorgungsleitung 17 verbunden. Die Leitungen 42, 43 sind anschließend mit einer Wandlervorrichtung 44 verbunden. Die Wandlervorrichtung 44 wandelt das gemessene, analoge Signal in ein digitales Signal um und übergibt dieses anschließend über Leitungen 45 der Steuervorrichtung 4. Selbstverständlich ist es möglich, daß die Wandlervorrichtung 44 als Verstärker für das gemessene Signal ausgelegt ist, sodaß das gemessene Signal nicht, wie zuvor erwähnt, in ein digitales Signal umgewandelt wird, sondern, daß das gemessene Signal um einen voreinstellbaren Wert verstärkt wird.

Damit auch die Spannung am Schweißbrenner 10 bzw. zwischen dem Schweißdraht 13 und dem Werkstück 16 erfaßt werden kann, ist eine weitere Leitung 46 mit der Wandlervorrichtung 44 und der Versorgungsleitung 36 verbunden. Die Wandlervorrichtung 44 hat die Aufgabe, die von der Meßvorrichtung 40 gemessenen, analogen Werte bzw. Signale zwischen dem Schweißdraht 13 und dem Werkstück 16 in digitale Werte bzw. Signale umzuwandeln bzw. die analogen Signale zu verstärken und anschließend an die Steuervorrichtung 4 weiterzuleiten, sodaß eine Verarbeitung der aufgenommenen Werte bzw. Signale von der Steuervorrichtung 4 durchgeführt werden kann.

Weiters weist die Steuervorrichtung 4 einen Datenbus 47 bzw. einen Feldbus auf. Die Steuervorrichtung ist mit dem seriellen Datenbus 47, insbesondere mit dem Feldbus, verbunden, an dem der Schweißbrenner 10 und/oder weitere Komponenten des Schweißgerätes 1 und/oder einer Schweißanlage, wie ein Schweißroboter, ein Schweißautomat, eine Fertigungseinrichtung, eine Fertigungsstraße, ein Drehtisch usw. angeschlossen sein können. Der Datenbus 47 kann beispielsweise durch einen CAN, Interbus-S, Profibus usw. gebildet sein und kann eine serielle Schnittstelle, insbesondere eine RS 232, RS 485 usw. aufweisen. Der Datenbus 47 ist zwischen der Steuervorrichtung 4 und dem Schweißbrenner 10 durch ein Busleitungssystem 48 gebildet, welches aus zumindest zwei elektrischen Leitungen besteht. An dem Busleitungssystem 48 sind zumindest zwei Abzweigvorrichtungen, die aus den einzelnen Bauteilen für die Datenübertragung über den Datenbus 47 bestehen und infolge als Schnittstellentreiber 49, 50 bezeichnet werden, angeschlossen und somit die Eingabe- 22 und/oder Anzeigevorrichtung 23 mit der Steuervorrichtung 4 verbunden. Hierzu weist der Schweißbrenner 10, wie schematisch mit strichlierten Linien umrandet, die einzelnen Bauteile für die Übertragung von Daten über das Busleitungssystem 48 auf.

Durch die Ausbildung des Datenbusses 47 aus einem zum Stand der Technik zählenden Datenbus 47, beispielsweise einer RS 232, ist für den Datenaustausch mit der Steuervorrichtung 4 im Schweißbrenner 10 der weitere Schnittstellentreiber 50 mit den dazugehörigen Funktionsbausteinen angeordnet, wie dies schematisch dargestellt ist. Im Schweißbrenner 10 besteht nun die Möglichkeit, daß über analoge und/oder digitale Ein- und/oder Ausgänge 51 entsprechende Bedienungselemente 52, insbesondere einzelne Taster 53 bis 56, angeordnet sein können. Die einzelnen für die Datenübertragung über den Datenbus 47 benötigten Bauelemente, wie beispielsweise ein Anzeigetreiber, die analogen und/oder digitalen Ein- und/oder Ausgänge 51, der Schnittstellentreiber 50 usw. sind in dem Schweißbrenner 10 angeordnet.

Weiters ist es möglich, daß an den Schnittstellentreiber 50 die Anzeigevorrichtung 23 angeschlossen ist, sodaß eine Datenübertragung bezüglich des Anzeigemodusses ebenfalls über den Schnittstellentreiber 50 erfolgen kann.

Durch die Anordnung der einzelnen Bedienungselemente 52 für die Eingabevorrichtung 22 ist es nunmehr möglich, daß der Benutzer verschiedenste Funktionsabläufe bzw. Schweißparameter über den Schweißbrenner 10 aufrufen bzw. einstellen kann, die über die Anzeigevorrichtung 23 wiederum am Schweißbrenner 10 angezeigt werden, d.h., daß beispielsweise durch Betätigung eines Tasters 53 bis 56 ein Signal vom Schnittstellentreiber 50 über das Busleitungssystem 48 an die Steuervorrichtung 4 übersandt wird, worauf die Steuervorrichtung 4 eine entsprechende Änderung des Betriebszustandes durchführt und diese Änderung anschließend wiederum über den Schnittstellentreiber 49 an das Busleitungssystem 48 weiterleitet, worauf der Schnittstellentreiber 50 ein entsprechendes Ansteuersignal für die Anzeigevorrichtung 23 generiert und somit der Benutzer die vorgenommene Änderung an der Anzeigevorrichtung 23 ablesen kann.

Durch die Verbindung des Schweißbrenners 10, insbesondere dessen Eingabevorrichtung 22 und Anzeigevorrichtung 23, mit der Steuervorrichtung 4 über den Datenbus 47 ist es nunmehr möglich, daß aufgrund der seriellen Datenübertragung Leitungen zur Kommunikation zwischen dem Schweißbrenner 10 und der Steuervorrichtung 4 eingespart werden können, da für die serielle Datenübermittlung nur wenige Leitungen, beispielsweise zwei bis neun Leitungen, benötigt werden. Die Datenübertragung über den seriellen Datenbus 47 wird durch ein entsprechendes Übertragungsprotokoll durchgeführt, wobei jedes beliebige aus dem Stand der Technik bekannte Übertragungsprotokoll eingesetzt werden kann.

Durch die Anordnung der aktiven und passiven Bauelemente für die Datenübertragung im Schweißbrenner 10 wird in vorteilhafter Weise erreicht, daß eine Vielfalt unterschiedlicher Typen von Schweißbrennern 10 für ein und das selbe Schweißgerät 1 eingesetzt werden kann, d.h., daß beispielsweise ein Schweißbrenner 10 mit einem entsprechenden Schnittstellentreiber 50, beispielsweise einer RS 232, nunmehr nicht - wie in dem dargestellten Ausführungsbeispiel - mit vier Tastern 53 bis 56 verwendet werden kann, sondern, daß dieser Schweißbrenner 10 mehr als vier Taster 53 bis 56 aufweisen kann, sodaß Sonderfunktionen ebenfalls über den Schweißbrenner 10 durchgeführt werden können, wobei für einen derartigen Schweißbrenner 10 keine zusätzlichen Leitungen bzw. Steuerleitungen mehr benötigt werden. Dies ist insofern möglich, da bei Betätigung der zusätzlich angeordneten Taster 53 bis *56* die Übertragung der durchzuführenden Funktionen bzw. Änderungen über den seriellen Datenbus 47 mit dem gleichen Übertragungsprotokoll erfolgt, sodaß eine beliebige Anzahl von Tastern 53 bis 56 eingesetzt werden kann. Die Auswertung der übertragenen Daten erfolgt anschließend in der Steuervorrichtung 4, sodaß entsprechend den übergebenen Daten die Steuervorrichtung 4 entsprechende Steuer- bzw. Regelvorgänge durchführen kann.

Hierzu ist es nunmehr nicht mehr erforderlich, daß das Schweißgerät 1 auf die unterschiedlichsten Schweißbrenner 10 abgestimmt werden muß, sondern daß nur mehr die Software bzw. die Programme, die im Speicher 30 hinterlegt sind, auf die einzelnen Schweißbrenner 10 abgestimmt sein muß, da die unterschiedlichsten Schweißbrenner 10 mit dem standardisierten Übertragungsprotokoll die Datenübertragung durchführen. Dazu ist es beispielsweise möglich, daß beim Kauf eines neuen Schweißbrenners 10 der Benutzer eine entsprechende Update-Diskette mitgeliefert bekommt, mit der er anschließend durch Einlegen in ein in das Schweißgerät 1 eingebautes oder mit dem Schweißgerät 1 verbundenes Diskettenlaufwerk, bzw. durch Übertragen der Daten über den Datenbus 47 durch Verbinden des Datenbusses 47 mit einem Computer, eine Softwareanpassung, die im Speicher 30 gespeichert wird, durchführen kann, sodaß der Benutzer anschließend den entsprechenden Schweißbrenner 10 jederzeit einsetzen kann. Es ist auch möglich, daß die Programme bzw. die Software des Schweißgerätes 1 bereits auf die unterschiedlichsten Schweißbrenner 10 abgestimmt sind, sodaß der Benutzer den Schweißbrenner 10 nur mit dem Schlauchpaket bzw. mit dem Schweißgerät 1 verbinden muß, worauf der Benutzer die vollständigen Funktionen des Schweißbrenners 10 für einen Schweißprozeß benützen kann.

Selbstverständlich ist es möglich, daß durch die Anordnung eines überschreibbaren bzw. veränderbaren Speichers 30 in der Steuervorrichtung 4 die Software, insbesondere die Anwenderprogramme, in dem Speicher 30 hinterlegt sein kann, sodaß auf die Software über eine Schnittstelle, insbesondere über den Datenbus 47, zugegriffen werden kann und somit eine Softwareänderung jederzeit möglich ist.

Durch eine derartige Ausbildung wird nun in vorteilhafter Weise erreicht, daß beliebig viele Schweißbrenner 10 für ein und das selbe Schweißgerät 1 eingesetzt werden können, wodurch eine relativ hohe Flexibilität für den Benutzer gegeben ist. Hierzu ist es auch möglich, daß beim Wechseln eines Schweißbrenners 10 eine automatische Erkennung durchgeführt wird.

Dies kann beispielsweise derart erfolgen, daß im Schweißbrenner 10 eine Kennung in einem Speicher hinterlegt ist, die beim Aktivieren des Schweißbrenners 10 bzw. bei der Inbetriebnahme des Schweißgerätes 1 automatisch von dem Schnittstellentreiber 50 an den Datenbus 47 ausgesandt wird, sodaß diese Kennung an die Steuervorrichtung 4 übertragen wird. Die Steuervorrichtung 4 vergleicht anschließend die vom Schweißbrenner 10 übersandte Kennung mit den im Speicher 30 hinterlegten Kennungen, sodaß bei Übereinstimmung die Steuervorrichtung 4 zusätzliche Daten zu dieser Kennung aus dem Speicher 30 auslesen kann und somit eine Typenerkennung eines Schweißbrenners 10 durchgeführt werden kann.

Hierzu ist es auch möglich, daß entsprechend dem an dem Schweißgerät 1 angeschlossenen Schweißbrenner 10 eine Betriebssystemanpassung bzw. Anwenderprogrammanpassung von der Steuervorrichtung 4 durchgeführt werden kann, d.h., daß entsprechende Voreinstellungen in den unterschiedlichen Schweißparametern von der Steuervorrichtung 4 durch Herausladen aus dem Speicher 30 durchgeführt werden, wodurch eine Optimierung des Schweißprozesses erzielt wird. Weiters ist es möglich, daß unterschiedliche Typen von Schweißbrennern 10 mit gegebenenfalls unterschiedlichen Eingabevorrichtungen 22 und/oder Anzeigevorrichtungen 23 versehen sind, wobei hierzu die unterschiedlichsten Schweißbrenner 10, beispielsweise ein mit dem Datenbus 47 kuppelbares Speicherelement, zur Definition oder zum Hinterlegen einer dem Typ des Schweißbrenners 10 zugeordneten Kennung angeordnet sind und somit eine automatische Erkennung des Schweißbrenners 10 durchgeführt werden kann.

Bei dem dargestellten Ausführungsbeispiel ist es beispielsweise möglich, daß der Taster 53 für die Erhöhung des an der Anzeigevorrichtung 23, insbesondere einer LCD-Anzeige, angezeigten Wertes zuständig ist, wogegen der Taster 54 für die Verkleinerung dieses Wertes eingesetzt wird, d.h., daß der Benutzer beim Betätigen des Tasters 53 den angezeigten Wert beispielsweise von 50 auf 60 erhöhen kann. Dies kann beispielsweise durch schrittweises Betätigen des Tasters 53 erfolgen, wodurch eine Datenübertragung über den Schnittstellentreiber 50 an die Steuervorrichtung 4 eingeleitet wird, worauf die Steuervorrichtung 4 über die Leistung 38 das Leistungsteil 3 entsprechend ansteuert.

Die weiteren Taster 55, 56 können beispielsweise zum Auswählen unterschiedlicher Schweißparameter verwendet werden, d.h., daß beispielsweise beim Betätigen des Tasters 55 die Anzeigevorrichtung 23 vom Schweißparameter des Stromwertes auf den Schweißdrahtdurchmesser usw. umspringt, sodaß der eingestellte bzw. vorgegebene Schweißdrahtdurchmesser an der Anzeigevorrichtung 23 angezeigt wird. Durch das Betätigen des Tasters 55 kann nun der Benutzer die einzelnen Schweißparameter abfragen. Hierzu ist es beispielsweise möglich, daß die Taster 55 und 56 für unterschiedliche Laufrichtungen zum Durchscrollen der einzelnen Schweißparameter verwendet werden können. Durch einen derartigen Schweißbrenner 10 hat der Benutzer die Möglichkeit, daß sämtliche zur Verfügung stehende Schweißparameter vom Schweißbrenner 10 aus ausgewählt und eingestellt werden können.

Der Unterschied zu den aus dem Stand der Technik bekannten Schweißbrennern 10 mit einer im Schweißbrenner 10 angeordneten Eingabevorrichtung 22 und Anzeigevorrichtung 23 liegt nun darin, daß die bei einem zum Stand der Technik zählenden Schweißbrenner 10 einzelnen Bedienungselemente 52 über einzelne Leitungen direkt an der Steuervorrichtung 4, insbesondere an der Mikroprozessorsteuerung 24, angeschlossen sind, d.h., daß beispielsweise bei Verwendung eines zum Stand der Technik zählenden Schweißbrenners 10 mit einer Brennertaste, einer Up- und Downtaste, einem Potentiometer, einer LED-Anzeige bzw. einer 7-Segmentanzeige diese Bedienungselemente 52 über einzelne Leitungen direkt an der Mikroprozessorsteuerung 24 angeschlossen sind. Durch die einzelnen direkten Anschlüsse der einzelnen Bedienungselemente 52 an die Steuervorrichtung 4 wird eine Vielzahl von Leitungen über das Schlauchpaket zum Schweißgerät 1 geführt, sodaß ein entsprechend dickes Schlauchpaket entsteht und somit die Flexibilität des Schweißbrenners 10 eingeschränkt wird. Ein wesentlicher Nachteil der zum Stand der Technik zählenden Schweißbrenner 10 liegt nun darin, daß bei unterschiedlichen Schweißbrennern 10 je nach Funktionsumfang der einzelnen Schweißbrenner 10 auch das Schweißgerät 1, insbesondere die Stromquelle 2, unterschiedlich bzw. überdimensioniert aufgebaut werden muß, damit eine große Anzahl von verschiedenen Schweißbrennern 10 am Schweißgerät 1 angeschlossen werden kann.

Weiters ist bei den zum Stand der Technik zählenden Systemen, bei denen die Bedienungselemente 52 direkt mit der Steuervorrichtung 4 verbunden sind, der Fall, daß bei einer Funktionsänderung eines Schweißbrenners 10 auch eine Änderung im Schweißgerät 1, insbesondere in der Elektronik, durchgeführt werden muß, wodurch ein hoher Aufwand für den Einsatz eines neuentwickelten Schweißbrenners 10 entsteht. Um eine entsprechende Störsicherheit gewährleisten zu können, sollen die einzelnen Treiberbausteine zum Entstören der Leitungen direkt an den einzelnen Bedienungselementen 52 bzw. an der Anzeigevorrichtung 24 angeordnet sein. Aufgrund der großen Anzahl von Leitungen für die einzelnen Bedienungselemente 52 muß ein großer Aufwand zum Entstören der Leitungen aufgebracht werden, sodaß eine Vergrößerung der Baugröße des Schweißbrenners 10 entsteht und somit wiederum eine Einschränkung des Schweißbrenners 10 in seiner Flexibilität gegeben ist.

Da durch die unterschiedlichen Aufbauten der unterschiedlichen Schweißbrenner 10 es auch möglich ist, daß unterschiedliche Stecker- bzw. Steuerkabelbelegungen bei den zum Stand der Technik eingesetzten Schweißbrennern 10 vorgenommen werden können, muß eine entsprechende Hardwareausbildung des Schweißgerätes 1 für unterschiedliche Schweißbrenner 10 geschaffen werden, sodaß die Kosten für ein derartiges Schweißgerät 1 erheblich erhöht werden. Durch die Ausbildung des zum Stand der Technik zählenden Schweißbrenners 10 mit den einzelnen, direkt mit der Steuervorrichtung 4 verbundenen Leitungen ist auch eine Beschränkung der Funktionalität der Schweißbrenner 10 gegeben, da für eine kostengünstige Herstellung des Schweißgerätes 1 dieses nicht auf jeden beliebigen Schweißbrenner 10 ausgelegt werden kann, da ansonsten für die unterschiedlichsten Schweißbrenner 10 mit den unterschiedlichsten Anschlüssen bzw. Varianten der Bedienungselemente 52 eine entsprechende Auslegung der Hardware im Schweißgerät 1 vorgenommen werden muß, wodurch die Kosten erheblich erhöht werden, d.h., daß beispielsweise bei Verwendung eines Schweißbrenners 10 mit nur zwei Tastern 53, 54 eine andere Hardwareansteuerung gegeben ist als bei einer Verwendung eines Schweißbrenners 10 mit vier oder mehr Tastern 53 bis 56, da bei Verwendung des Schweißbrenners 10 mit nur zwei Tastern 53, 56 zumindest zwei oder drei Leitungen zur Steuervorrichtung 4 geführt werden, wogegen bei Verwendung eines Schweißbrenners 10 mit vier Tastern 53 bis 56 jedoch zumindest vier oder fünf Leitungen zur Steuervorrichtung 4 geführt werden und somit die Hardware des Schweißgerätes 1 auf die unterschiedlichen Typen der Schweißbrenner 10 abgestimmt sein muß.

Durch die Ausbildung des Schweißbrenners 10 mit einem Datenbus 47 wird nun erreicht, daß durch die Standardisierung der Schnittstellen sowie des Übertragungsprotokolls für den Datenaustausch zwischen dem Schweißgerät 1 und dem Schweißbrenner 10 eine für die unterschiedlichsten Schweißbrenner 10 standardisierte Brennersteckerbelegung eingesetzt werden kann, sodaß bei unterschiedlichen Bauformen der Schweißbrenner 10 die Brennersteckerbelegung gleichgehalten werden kann bzw. die Anzahl der Leitungen zwischen dem Schweißgerät 1 und dem Schweißbrenner 10 aufgrund von unterschiedlichen Funktionen der Schweißbrenner 10 durch die serielle Datenübertragung nicht erhöht werden muß. Durch die erfindungsgemäße Ausbildung des Schweißbrenners 10 bzw. der Verbindung des Schweißbrenners 10 mit dem Schweißgerät 1 über den Datenbus 45 wird weiters erreicht, daß auch eine Ferneinstellung über einen Fernregler, wie er aus dem Stand der Technik zum Ändern eines Schweißparameters bekannt ist, entfallen kann, da der Schweißbrenner 10 mit unterschiedlichsten Funktionen ausgebildet werden kann und somit eine Verwendung eines Ferneinstellers bzw. eines Fernreglers nicht mehr notwendig ist. Durch die Verwendung von wenigen Leitungen, insbesondere von zwei bis neun Leitungen, für die Datenübertragung wird in vorteilhafter Weise erreicht, daß das Schlauchpaket zum Verbinden des Schweißbrenners 10 mit dem Schweißgerät 1 sehr dünn ausgelegt werden kann, sodaß eine hohe Flexibilität für den Benutzer gegeben ist und somit auch eine sichere Datenübertragung über lange Distanzen möglich ist, wie dies beispielsweise beim Einsatz eines Schweißgerätes 1 in Schiffswerften der Fall ist.

Bei einer Neuentwicklung eines Schweißbrenners 10 mit weiteren unterschiedlichen Funktionen bzw. Sonderfunktionen ist eine Hardwareänderung beim Schweißgerät 1 nicht notwendig, da durch den standardisierten Datenbus 47 die Datenübertragung seriell erfolgt, sodaß eine beliebige Anzahl von Bedienungselementen 52 bzw. eine beliebige Anzahl von Anzeigevorrichtungen 23 im Schweißbrenner 10 angeordnet sein kann, d.h., daß aufgrund der seriellen Datenübertragung die einzelnen am Schweißbrenner 10 durchgeführten Bedienungsvorgänge durch den Schnittstellentreiber 50 in ein serielles Datensignal bzw. in ein vorgegebenes Übertragungsprotokoll umgewandelt werden und dieses über das Busleitungssystem 48 an die Steuervorrichtung 4 übergeben wird, wodurch bei einer Neuentwicklung eines Schweißbrenners 10 wiederum durch den Einsatz des standardisierten Datenbusses 47 die standardisierte Brennerstekkerbelegung eingesetzt werden kann und somit eine Hardwareänderung nicht notwendig ist.

Ein weiterer Vorteil der erfindungsgemäßen Ausbildung des Schweißgerätes 1 bzw. des Schweißbrenners 10 liegt darin, daß die einzelnen aktiven Bauteile im Schweißbrenner 10 angeordnet sein können, da nur eine geringe Anzahl von Leitungen für die serielle Datenübertragung benötigt wird und somit die im Busleitungssystem 48 aufgenommenen Störungen direkt am Schweißbrenner 10 ausgefiltert werden können, sodaß eine einwandfreie Datenübertragung über das Busleitungssystem 48 möglich ist. Selbstverständlich ist es möglich, daß das Ausfiltern von Störungen über eine entsprechende Software bzw. softwaremäßig durchgeführt werden kann.

Es ist auch möglich, daß unterschiedliche Variantenbildungen der Schweißbrenner 10 durchgeführt werden können, da die Datenübertragung über das Busleitungssystem 48 standardisiert ist, sodaß nur das Betriebssystem bzw. die Software des Schweißgerätes 1 auf die neuen Varianten des Schweißbrenners 10 abgestimmt werden muß und somit eine Hardwareänderung im Schweißgerät 1 nicht mehr notwendig ist. Durch eine derartige Ausbildung werden dem Benutzer erhebliche Kosten eingespart, da der Benutzer bei Verwendung von neuartigen Schweißbrennern 10 diese durch die Verwendung des Datenbusses 47 wiederum mit dem alten Schweißgerät 1 verbinden kann und somit keine preisliche Belastung für Hardwareänderungen am Schweißgerätes 1 anfallen. Durch die serielle Datenübertragung wird auch eine Einsparung von einzelnen Steuerleitungen des Busleitungssystems 48 erreicht, da durch die standardisierte Datenübertragung, insbesondere durch die serielle Datenübertragung, nur eine geringe Anzahl von Leitungen benötigt wird.

Es wird auch eine Kosteneinsparung bei Entwicklungen von Schweißbrennern 10 erzielt, da durch das Zusammenführen der aktiven und passiven Bauteile für die Datenübertragung im Bereich des Schweißbrenners 10 der Schaltungsaufbau standardisiert werden kann und somit für die unterschiedlichsten Schweißbrenner 10 immer wieder der selbe Aufbau mit unterschiedlichen Funktionen eingesetzt werden kann.

Weiters besteht die Möglichkeit, daß durch die Verwendung eines Datenbusses 47 in dem Schweißgerät 1 eine Steuerung externer Komponenten über diesen möglich ist, d.h., daß beispielsweise beim Einsetzen eines Schweißgerätes 1 in einen Schweißroboter bzw. einen Schweißautomaten das Schweißgerät 1, insbesondere die Steuervorrichtung 4, mit dem Schweißroboter bzw. dem Schweißautomaten, insbesondere dessen Steuerung, über den Datenbus 47 zusammengekuppelt werden kann, sodaß ein Datenaustausch zwischen dem Schweißgerät 1 und dem Schweißroboter bzw. dem Schweißautomaten ermöglicht wird. Hierzu ist es beispielsweise möglich, daß bei Verwendung des Schweißgerätes 1 in einer Fertigungsstraße oder Fertigungseinrichtung für die Autoindustrie das Weiterbewegen der einzelnen Bauteile über das Schweißgerät 1 gesteuert wird, d.h., daß beispielsweise nach Beendigung eines Schweißvorganges das Schweißgerät 1 über den Datenbus 47 der Fertigungsstraße oder der Fertigungseinrichtung, insbesondere der für die Fertigungsstraße oder Fertigungseinrichtung eingesetzten Steuervorrichtung bzw. SPS-Steuerung oder Computersteuerung, ein Signal übergibt, sodaß die Steuervorrichtung erkennen kann, daß der Schweißprozeß vom Schweißgerät 1 abgeschlossen ist und somit ein Weitertransport des soeben bearbeiteten Bauteils eingeleitet wird.

Es ist auch möglich, daß durch die Anordnung einer externen Schnittstelle, diese zum Verbinden des Schweißgerätes 1 mit einem Computer verwendet werden kann, sodaß über den Datenbus 47 Softwareänderungen durchgeführt werden können. Weiters ist es möglich, daß durch die Anordnung der Steuervorrichtung 4 und des standardisierten Datenbusses 47 im Schweißgerät 1 beim Einsatz des Schweißgerätes 1 in einem Montagebetrieb für weitere Komponenten, wie beispielsweise für einen Drehtisch usw., diese über die Steuervorrichtung 4 des Schweißgerätes 1 gesteuert werden können, sodaß zusätzliche Steuervorrichtungen für die weiteren Komponenten entfallen können.

Durch die Verwendung eines Datenbusses 47 wird weiters erreicht, daß die für das Schweißgerät 1 weiteren benötigten Komponenten, wie beispielsweise das Drahtvorschubgerät 11 usw., ebenfalls über den Datenbus 47 bzw. das Busleitungssystem 48 angesteuert werden können. Dies ist beispielsweise in Fig. 2 durch einen weiteren, im Datenbus 47 angeordneten Schnittstellentreiber 57 dargestellt, d.h., daß durch Verbindung des Drahtvorschubgerätes 11 mit dem Schnittstellentreiber 57 ein serieller Datenaustausch zwischen der Steuervorrichtung 4 und dem Drahtvorschubgerät 11 durchgeführt werden kann. Der Vorteil liegt nun darin, daß nicht mehr - wie aus dem Stand der Technik bekannt - das Drahtvorschubgerät 11 wiederum direkt über einzelne Leitungen mit der Steuervorrichtung 4 verbunden wird, sondern daß wiederum durch Einsatz des standardisierten Datenbusses 47 die Steuerung erfolgt, wodurch eine Leitungseinsparung sowie eine sichere Datenübertragung gewährleistet ist. Es wird dadurch die Möglichkeit geschaffen, daß unterschiedliche Drahtvorschubgeräte 11 eingesetzt werden können, da durch die Verwendung des Datenbusses 47 nur eine Softwareänderung in der Steuervorrichtung 4 für die Anpassung an das Drahtvorschubgerät 11 vorgenommen werden muß.

Selbstverständlich ist es möglich, daß mehrere weitere Schnittstellentreiber 57 am Datenbus 47, insbesondere im Busleitungssystem 48, angeordnet sein können, wodurch beliebig viele Komponenten über den Datenbus 47 von der Steuervorrichtung 4 aus gesteuert werden können.

Selbstverständlich ist es möglich, daß anstelle des elektrischen Datenbusses 47 jedes weitere beliebige aus dem Stand der Technik bekannte Übertragungssystem eingesetzt werden kann, d.h., daß es beispielsweise auch möglich ist, anstelle von elektrischen Leitungen einen oder mehrere Lichtleiter einzusetzen, sodaß der Datenaustausch über den Lichtleiter erfolgt, wodurch eine entsprechend hohe Störsicherheit gegeben ist, da elektrische Einflüsse bei der Datenübertragung über den Lichtleiter nicht mehr berücksichtigt werden müssen. Bei einer derartigen Ausbildung eines Datenbusses 47 über einen Lichtleiter müssen die einzelnen Schnittstellentreiber 49, 50 und 57 auf das entsprechende Leitungssystem abgestimmt sein.

Weiters ist es möglich, daß unterschiedliche Typen von Schweißbrennern 10 mit gegebenenfalls unterschiedlichen Eingabevorrichtungen 22 und/oder Anzeigevorrichtungen 23 versehen sind, wobei jeweils gleichartige Abzweigvorrichtungen, insbesondere Schnittstellentreiber 49, 50, 57, zum Anschluß am Datenbus 47 angeordnet sind, wodurch eine Vielzahl von unterschiedlich ausgeführten Schweißbrennern 10 eingesetzt werden kann.

Weiters ist es möglich, daß der Datenbus 47 mit einer externen Bedienungsvorrichtung verbunden werden kann. Hierzu weist die Bedienungsvorrichtung die Eingabe- 22 und/oder Anzeigevorrichtung 23 auf, sodaß eine Steuerung des Schweißgerätes 1, insbesondere Einstellung der einzelnen Schweißparameter, über das Bedienungselement durchgeführt werden kann. Das Bedienungselement kann dabei unabhängig vom Schlauchpaket mit einem eigenen Schlauchpaket an das Schweißgerät 1, insbesondere an den Datenbus 47, angeschlossen werden. Weiters ist es möglich, daß die Bedienungsvorrichtung derartig ausgebildet ist, daß diese beispielsweise über eine Haltevorrichtung oder andere Befestigungsmittel mit dem Schweißbrenner 10 verbunden werden kann. Hierzu ist es wiederum möglich, wie dies für die zuvor beschriebenen Ausführungen ebenfalls der Fall ist, daß die Eingabevorrichtung 22 und/oder die Anzeigevorrichtung 23 während des Schweißprozesses mit der Steuervorrichtung 4 zur Übermittlung von Steuersignalen über den Datenbus 47 verbunden ist, sodaß auch während des Schweißprozesses eine Änderung der Schweißparameter möglich ist und somit eine optimale Anpassung des Schweißprozesses vom Benutzer durchgeführt werden kann.

Selbstverständlich ist es möglich, daß die Datenübertragung zumindest in Teilbereichen des Schweißgerätes 1 mit den Komponenten des Schweißgerätes 1, insbesondere dem Schweißbrenner 10, oder externen Komponenten drahtlos, z.B. über Lichtsignale, wie Infrarotsignal, erfolgen kann. Dabei wird jedoch wiederum für die drahtlose Datenübertragung ein standardisiertes bzw. einheitliches Übertragungsprotokoll von den einzelnen Komponenten verwendet, sodaß den Benutzern eine hohe Flexibilität beim Einsatz eines derartigen Schweißgerätes 1 zur Verfügung steht. Hierzu ist es beispielsweise auch möglich, daß beim Einsatz mehrerer Schweißgeräte 1 jedes Schweißgerät 1 eine eigene Kennung zugeteilt bekommt, sodaß durch die Kennung eine Zuordnung der Daten gegeben ist. Diese Kennung wird von jeder Komponente eines Schweißgerätes 1 beispielsweise in einem nichtflüchtigen Speicher hinterlegt, wodurch jede Komponente beim Empfang von Daten zuerst diese Kennung ausfiltert und anschließen bei Übereinstimmung einen entsprechenden Steuervorgang durchführen bzw. ausführen kann.

Weiters ist es möglich, daß der Schweißbrenner 10 zusätzlich zu dem Datenbus 47 auch noch direkt mit der Steuervorrichtung 4, insbesondere der Mikroprozessorsteuerung 24, verbundene Bedienungselemente 52 aufweisen kann, die direkt mit der Steuervorrichtung 4 über Leitungen verbunden sind, d.h., daß ein Parallelbetrieb zwischen der Eingabevorrichtung 22 und den direkt mit der Steuervorrichtung 4 verbundenen Bedienungselementen 52 durchgeführt werden kann. Vorteilhaft ist hierbei, daß bei Ausfall des Datenbusses 47 die Grundfunktionen des Schweißbrenners 10 aufrecht erhalten bleiben, sodaß der Benutzer jederzeit einen Schweißprozeß durchführen kann. Hierzu kann der Benutzer die Schweißparameter über die Eingabe- und/oder Anzeigevorrichtung 21 am Schweißgerät 1 ändern. Bei einer derartigen Ausbildung wird der Schweißbrenner 10 meist nur mit jenen Bedienungselementen 52, wie beispielsweise dem zum Starten eines Schweißprozesses angeordneten Taster, direkt mit der Steuervorrichtung 4 verbunden, der für einen Schweißprozeß unbedingt benötigt wird, da eine Änderung der Schweißparameter jederzeit vom Benutzer am Schweißgerät 1 vorgenommen werden kann.

Abschließend sei darauf hingewiesen, daß in den zuvor beschriebenen Ausführungsbeispiel einzelne Teile unproportional vergrößert bzw. schematisch dargestellt sind, um das Verständnis der erfindungsgemäßen Lösung zu verbessern.

### Bezugszeichenaufstellung

- 1: Schweißgerät
- 2: Stromquelle
- 3: Leistungsteil
- 4: Steuervorrichtung
- 5: Umschaltglied

- 6: Steuerventil
- 7: Versorgungsleitung
- 8: Gas
- 9: Gasspeicher
- 10: Schweißbrenner

- 11: Drahtvorschubgerät
- 12: Versorgungsleitung
- 13: Schweißdraht
- 14: Vorratstrommel
- 15: Lichtbogen

- 16: Werkstück
- 17: Versorgungsleitung
- 18: Kühlkreislauf
- 19: Strömungswächter
- 20: Wasserbehälter

- 21: Eingabe- und/oder Anzeigevorrichtung
- 22: Eingabevorrichtung
- 23: Anzeigevorrichtung
- 24: Mikroprozessorsteuerung
- 25: Leitung

- 26: Leitung
- 27: Eingabeeinrichtung
- 28: Anzeigeeinrichtung
- 29: Bussystem
- 30: Speicher

- 31: Leitung
- 32: Inverterstromquelle
- 33: Versorgungsleitung
- 34: Versorgungsleitung
- 35: Spannungsversorgungsnetz

- 36: Versorgungsleitung
- 37: Hochfrequenzgenerator
- 38: Leitung
- 39: Leitung
- 40: Meßvorrichtung

- 41: Shunt
- 42: Leitung
- 43: Leitung
- 44: Wandlervorrichtung
- 45: Leitung

- 46: Leitung
- 47: Datenbus
- 48: Busleitungssystem
- 49: Schnittstellentreiber
- 50: Schnittstellentreiber

- 51: Ein- und/oder Ausgang
- 52: Bedienungselement
- 53: Taster
- 54: Taster
- 55: Taster

- 56: Taster
- 57: Schnittstellentreiber

## Patentansprüche

1. Vorrichtung bestehend aus einer Steuervorrichtung (4) einem Schweißgerät (1) bzw. einer Schweißanlage, einem über Verbindungsleitungen mit dem Schweißgerät bzw. mit der Schweißanlage verbundenen Schweißbrenner (10), wobei am Schweißbrenner (10) zumindest eine Eingabevorrichtung (22) und/oder eine Anzeigevorrichtung (23) angeordnet ist, wobei die Steuervorrichtung (4) mit einem seriellen Datenbus (47), insbesondere Feldbus, verbunden ist, an dem das Schweißgerät bzw. die Schweißanlage und gegebenenfalls weitere Komponente des Schweißgerätes (1) angeschlossen sind, **dadurch gekennzeichnet, dass** der Schweißbrenner (10) an den seriellen Datenbus (47) angeschlossen ist und wobei die einzelnen für die Datenübertragung über den Datenbus (47) benötigten Bauelemente, wie beispielsweise ein Anzeigetreiber, analoge und/oder digitale Ein- und/oder Ausgänge (51), ein Schnittstellentreiber (49, 50, 57) usw., in dem Schweißbrenner (10) angeordnet sind.

2. Vorrichtung nach Anspruch 1, **dadurch gekennzeichnet, daß** der Datenbus (47) beispielsweise durch einen CAN, Interbus-S, Profibus gebildet ist und eine serielle Schnittstelle, insbesondere eine RS 232, RS 485 usw. aufweist.

3. Vorrichtung nach Anspruch 1 oder 2, **dadurch gekennzeichnet daß** der Datenbus (47) zwischen der Steuervorrichtung (4) und dem Schweißbrenner (10) durch ein Busleitungssystem (48) gebildet ist, an dem zumindest zwei Abzweigvorrichtungen, z.B. Schnittstellentreiber (49, 50, 57), angeschlossen sind.

4. Vorrichtung nach einem oder mehreren der vorhergehenden Ansprüche, **dadurch gekennzeichnet, daß** die im Schweißbrenner (10) angeordnete Eingabe- (22) und/oder Ausgabevorrichtung (23) über den Datenbus (47) mit der Steuervorrichtung (4) verbunden ist.

5. Vorrichtung, nach einem oder mehreren der vorhergehenden Ansprüche, **dadurch gekennzeichnet, daß** die Bedienungselemente (52) über analoge und/oder digitale Ein- und/oder Ausgänge (51) an dem Datenbus (47) angeschlossen sind.

6. Vorrichtung nach einem oder mehreren der vorhergehenden Ansprüche, **da-durch gekennzeichnet**, **daß** unterschiedliche Typen von Schweißbrennern (10) mit gegebenenfalls unterschiedlichen Eingabe- (22) und/oder Anzeigevorrichtungen (23) versehen sind und jeweils gleichartige Abzweigvorrichtungen, z.B. Schnittstellentreiber (49, 50, 57), zum Anschluß am Datenbus (47) angeordnet sind.

7. Vorrichtung nach einem oder mehreren der vorhergehenden Ansprüche, **dadurch gekennzeichnet, daß** in dem Schweißbrenner (10) ein mit dem Datenbus (47) kuppelbares Speicherelement zur Definition oder zum Hinterlegen einer dem Typ des Schweißbrenners (10) zugeordneten Kennung angeordnet ist.

8. Vorrichtung nach einem oder mehreren der vorhergehenden Ansprüche, **dadurch gekennzeichnet, daß** die Steuervorrichtung (4) durch eine Mikroprozessorsteuerung (24) gebildet ist.

9. Vorrichtung nach einem oder mehreren der vorhergehenden Ansprüche, **dadurch gekennzeichnet, daß** die Steuervorrichtung (4) überschreibbare bzw. veränderbare Speicher (30) für die Software, insbesondere die Anwenderprogramme, aufweist, die mit einer Schnittstelle, insbesondere dem Datenbus (47), verbindbar sind.

10. Vorrichtung nach einem oder mehreren der vorhergehenden Ansprüche, **dadurch gekennzeichnet, daß** die Steuervorrichtung (4) des Schweißgerätes (1) über den Datenbus (47) mit zumindest einer Steuervorrichtung wenigstens einer externen Komponente, beispielsweise einem Schweißroboter oder einem Schweißautomaten usw., verbunden ist.

11. Vorrichtung nach einem oder mehreren der vorhergehenden Ansprüche, **dadurch gekennzeichnet, daß** das Busleitungssystem (48) durch einen oder mehrere Lichtleiter gebildet ist.

12. Vorrichtung nach einem oder mehreren der vorhergehenden Ansprüche, **dadurch gekennzeichnet, daß** der Datenbus (47) mit einer externen Bedienungsvorrichtung verbunden ist, in die die Eingabe- (22) und/oder Anzeigevorrichtung (23) angeordnet ist.

13. Vorrichtung nach einem oder mehreren der vorhergehenden Ansprüche, **dadurch gekennzeichnet, daß** die Datenübertragung zumindest in Teilbereichen drahtlos, z.B. über Lichtsignal, wie Infrarotsignale, erfolgt.

14. Vorrichtung nach einem oder mehreren der vorhergehenden Ansprüche, **dadurch gekennzeichnet, daß** die Eingabe- (22) und/oder Anzeigevorrichtung (23) während des Schweißprozesses mit der Steuervorrichtung (4) zur Übermittlung von Steuersignalen über den Datenbus (47) verbunden ist.

## Claims

1. Device comprising a control device (4), a welding apparatus (1) or welding facility, a welding torch (10) connected to the welding apparatus (1) or welding facility via connecting lines, and at least one input device (22) and a display device (23) are provided on the welding torch (10), and the control device (4) is connected to a serial data bus (47), in particular a field bus, to which the welding apparatus (1) or welding facility and other components of the welding apparatus (1) are connected as necessary, **characterised in that** the welding torch (10) is connected to the serial data bus (47) and the individual components needed for the data transmission across the data bus (47), comprising digital inputs and outputs (51) and an interface driver (49, 50, 57), are disposed in the welding torch (10), and all the available welding parameters can be selected and set from the welding torch (10) due to the fact that a push button (53) can be used to increase and a push button (54) can be used to decrease the value displayed on the display device (23), and different welding parameters can be selected and displayed by means of the display device (23) when other push buttons (55, 56) are operated, the input device (22) comprising the individual push buttons (53, 54, 55, 56).

2. Device as claimed in claim 1, **characterised in that** the data bus (47) is provided in the form of a CAN, Interbus-S, Profibus, for example, and has a serial interface, in particular an RS 232, RS 485, etc..

3. Device as claimed in one or more of the preceding claims, **characterised in that** the input (22) and output device (23) disposed in the welding torch (10) is connected to the control device (4) via the data bus (47).

4. Device as claimed in one or more of the preceding claims, **characterised in that** different types of welding torches (10) may be provided with different input (22) and display devices (23) as necessary and branching devices of the same type are provided for connecting to the data bus (47) in each case, for example interface drivers (49, 50, 57).

5. Device as claimed in one or more of the preceding claims, **characterised in that** a memory element which can be connected to the data bus (47) is provided on the welding torch (10) for defining or storing a code assigned to the type of welding torch (10).

6. Device as claimed in one or more of the preceding claims, **characterised in that** the control device (4) is a microprocessor controller (24).

7. Device as claimed in one or more of the preceding claims, **characterised in that** the control device (4) has memories (30) which can be overwritten and amended for the software, in particular the user programmes, which can be connected to an interface, in particular the data bus (47).

8. Device as claimed in one or more of the preceding claims, **characterised in that** the control device (4) of the welding apparatus (1) is connected via the data bus (47) to a control device of at least one external component, for example a welding robot or a welding automaton, etc..

9. Device as claimed in one or more of the preceding claims, **characterised in that** the bus line system (48) comprises one or more optical conductors.

10. Device as claimed in one or more of the preceding claims, **characterised in that** the data is transmitted wirelessly in at least part-regions, e.g. via an optical signal such as infrared signals.

11. Device as claimed in one or more of the preceding claims, **characterised in that** the input (22) and display device (23) is connected to the control device (4) during the welding process in order to transmit control signals via the data bus (47).

## Revendications

1. Dispositif consistant en un dispositif de commande (4), un appareil de soudage (1) ou une installation de soudage, un chalumeau de soudage (10) relié par des conduites de raccordement à l'appareil de soudage (1) ou à l'installation de soudage, étant disposé sur le chalumeau de soudage (10) au moins un dispositif de saisie (22) et un dispositif d'affichage (23), le dispositif de commande (4) étant raccordé à un bus de données sériel (47), notamment un bus de champ, auquel l'appareil de soudage (1) ou l'installation de soudage et d'autres composants de l'appareil de soudage (1) sont raccordés, **caractérisé en ce que** le chalumeau de soudage (10) est raccordé au bus de données sériel (47), les différents éléments de construction nécessaires pour la transmission des données par le bus de données (47) et comprenant des entrées et sorties numériques (51) et un pilote d'interface (49, 50, 57) étant disposés dans le chalumeau de soudage (10), tous les paramètres de soudage à disposition pouvant être sélectionnés et réglés depuis le chalumeau de soudage (10) du fait qu'une touche (53) est affectée à l'augmentation et une touche (54) à la réduction de la valeur indiquée sur le dispositif d'affichage (23) et, qu'en actionnant d'autres touches (55, 56), on peut sélectionner et afficher avec le dispositif d'affichage (23) différents paramètres de soudage, le dispositif de saisie (22) étant constitué par les différentes touches (53, 54, 55, 56).

2. Dispositif selon la revendication 1, **caractérisé en ce que** le bus de données (47) est constitué par exemple par un CAN, un Interbus-S, un Profibus et présente une interface sérielle, notamment RS 232, RS 485, etc.

3. Dispositif selon une ou plusieurs des revendications précédentes, **caractérisé en ce que** le dispositif de saisie (22) et d'édition (23) disposé dans le chalumeau de soudage (10) est relié par le bus de données (47) au dispositif de commande (4) .

4. Dispositif selon une ou plusieurs des revendications précédentes, **caractérisé en ce que** différents types de chalumeaux de soudage (10) sont pourvus de dispositifs de saisie (22) et d'affichage (23) éventuellement différents et que des dispositifs de dérivation respectivement similaires, par exemple des pilotes d'interface (49, 50, 57) à raccorder au bus de données (47) sont prévus.

5. Dispositif selon une ou plusieurs des revendications précédentes, **caractérisé en ce que**, dans le chalumeau de soudage (10), est disposé un élément de sauvegarde pouvant être couplé au bus de données (47) pour la définition ou l'enregistrement d'un identifiant attribué au type de chalumeau de soudage (10).

6. Dispositif selon une ou plusieurs des revendications précédentes, **caractérisé en ce que** le dispositif de commande (4) est constitué par une commande à microprocesseur (24).

7. Dispositif selon une ou plusieurs des revendications précédentes, **caractérisé en ce que** le dispositif de commande (4) présente des mémoires (30) pouvant être écrasées ou modifiées pour le logiciel, notamment les programmes d'application, et qui peuvent être reliées à une interface, notamment au bus de données (47).

8. Dispositif selon une ou plusieurs des revendications précédentes, **caractérisé en ce que** le dispositif de commande (4) de l'appareil de soudage (1) est relié par le bus de données (47) à au moins un dispositif de commande d'au moins un composant externe, par exemple un robot de soudage ou un automate de soudage, etc.

9. Dispositif selon une ou plusieurs des revendications précédentes, **caractérisé en ce que** le système conducteur de bus (48) est constitué d'un ou plusieurs conducteurs de lumière.

10. Dispositif selon une ou plusieurs des revendications précédentes, **caractérisé en ce que** la transmission des données a lieu au moins dans des zones partielles sans fil, par exemple via un signal lumineux, comme des signaux infrarouges.

11. Dispositif selon une ou plusieurs des revendications précédentes, **caractérisé en ce que** le dispositif de saisie (22) et d'affichage (23) est relié pendant le processus de soudage au dispositif de commande (4) pour la transmission de signaux de commande via le bus de données (47).
